# EUROPEAN PATENT APPLICATION

(11) **EP 3 570 554 A1**
(43) Date of publication of application: **20.11.2019**
(21) Application number: 18305601.9
(22) Date of filing: 16.05.2018
(51) Int. Cl.: H04N 21/431, H04N 21/482, H04N 21/25, H04N 21/466, H04N 21/485

(54) **METHOD FOR A PROGRAM GUIDE AND CORRESPONDING APPARATUS**

(71) Applicant: InterDigital CE Patent Holdings, 75017 Paris (FR)
(72) Inventor: JEGOU, Karine, 35576 Cesson-Sévigné Cedex (FR); FRALEU, Sébastien, 35576 Cesson-Sévigné Cedex (FR); QUERRE, Goulven, 35576 Cesson-Sévigné Cedex (FR)
(74) Representative: Huchet, Anne

(57) **Abstract**

In an electronic program guide according to the present principles, information of scheduled programs is rendered on a time line and per time slot. The time slot width is adjusted per time slot according to user behavior obtained from user navigation in the electronic program guide, resulting in a non-linear timeline in which rendering space per time slot is variable.

## Description

### FIELD

The present disclosure generally relates to the field of Electronic Program Guides (EPG).

### BACKGROUND

Any background information described herein is intended to introduce the reader to various aspects of art, which may be related to the present embodiments that are described below. This discussion is believed to be helpful in providing the reader with background information to facilitate a better understanding of the various aspects of the present disclosure. Accordingly, it should be understood that these statements are to be read in this light.

The advent of digital radio and television was accompanied by a vast offering of television and radio channels to choose from. Electronic program guides have proved to be of great help for consumers for selecting a television program to watch or a radio station to listen to. Today, these electronic program guides have become commonplace. They integrate supplementary features such as access to video on demand ("VoD"), broadcast replay ("Replay"), time-shift and Personal Video Recorder ("PVR") functions. The EPG therefore has become a key feature of many electronic devices, enabling service providers to present their service offering. The EPG may include advertisements and shortcuts to items of (potential) interest to a user and may therefore be a source of additional revenue for the service provider. One of the core features accessed most frequently by EPG users remains a continuously updated menu of scheduled broadcast programming for ongoing and upcoming programs. For this purpose, the EPG includes a Graphical User Interface (GUI) which typically presents the EPG information in a grid. The grid lists broadcast television and broadcast radio channels with currently airing (ongoing, present) and upcoming (scheduled, following, next) programming and is organized per time slot. An EPG grid may include scheduled programming spanning over a period of several hours, e.g., 'now', 'this evening', and up to an entire day or even up to several days, e.g., a week. EPGs may have one or more presentation modes. An EPG may have only one presentation mode in which the grid renders information spanning over a period of several hours only. This enables presentation of detailed information with good legibility. However, in this mode, it is difficult for a user to search information that lies further ahead in the future, as it requires scrolling operations, which results in a loss of overview for the user. To overcome this problem, an EPG may have several modes for each of the above discussed spanning periods. Legibility of the EPG information is good when an EPG user accesses to EPG information concerning present and immediately following programming. In this first mode, the user may be provided with detailed information. In a second mode, the EPG grid includes scheduled programming spanning over a period greater than several hours, for example a day or a week. In this mode, legibility requires that the more detailed information cannot be presented. A user, wishing to access to detailed information, has to select the specific time slot of interest to access to the first presentation mode in which the more detailed information is rendered. An EPG user, seeking information in an EPG spanning over more than several hours, may be required to repeatedly toggle back and forth between the two presentation modes. This may discourage the user from using the EPG, leading to customer dissatisfaction and potentially leading to loss of revenue for the service provider.

It is therefore desirable to provide a method and device for improved access to program guide information.

### SUMMARY

According to one aspect of the present disclosure, there is provided a method for a program guide. The method comprises obtaining at least one user navigation parameter from user navigation in an electronic program guide per time slot of the electronic program guide. The method further comprises adjusting time slot width for rendering program information per time slot of the electronic program guide according to the at least one user navigation parameter by increasing time slot width for more consulted time slots and reducing time slot width for less consulted time slots.

According to a further aspect of the method, the method further comprises, during initialization of the electronic program guide and before obtaining the at least one user navigation parameter, adjusting the time slot width per time slot of the electronic program guide based on user navigation parameters obtained from other users.

According to a further aspect of the method, the method further comprises storing the user navigation parameters in a first memory and in a second memory, the user navigation parameters in the first memory being obtained from a preceding use of the electronic program guide, and the user navigation parameters in the second memory being obtained from a present use of the electronic program guide; and when the electronic program guide is closed, updating the user navigation parameters in the first memory with the user navigation parameters from the second memory.

According to a further aspect of the method, the user navigation parameters are obtained from measuring time spent by a user on consulting electronic program guide information per time slot.

According to a further aspect of the method, the time spent is measured from rendering duration of electronic program guide information per time slot.

According to a further aspect of the method, the time spent is measured according to frequency of user consultation of the electronic program guide information per time slot of the electronic program guide.

According to a further aspect of the method, the method is implemented by a mobile communication device.

According to a further aspect of the method, the method is implemented by a set top box.

The present principles also relate to a device for rendering a program guide, the device comprising a processor configured to obtain at least one user navigation parameter from user navigation in an electronic program guide per time slot of the electronic program guide; and to adjust time slot width for rendering program information per time slot of the electronic program guide according to the at least one user navigation parameter by increasing time slot width for more consulted time slots and reducing time slot width for less consulted time slots.

According to a further aspect of the device, the processor is further configured to, during initialization of the electronic program guide and before obtaining the at least one user navigation parameter, adjust the time slot width per time slot of the electronic program guide based on user navigation parameters obtained from other users.

According to a further aspect of the device, the device further comprises a first memory and a second memory, the first memory being configured to store the user navigation parameters obtained from a preceding use of the electronic program guide and the second memory being configured to store user navigation parameters obtained from a present use of the electronic program guide; and the processor being further configured to, when the electronic program guide is closed, update the user navigation parameters in the first memory with the user navigation parameters from the second memory.

According to a further aspect of the device, the processor is further configured to obtain the user navigation parameters from measuring time spent by a user on consulting electronic program guide information per time slot.

According to a further aspect of the device, the processor is further configured to measure the time spent from a rendering duration of electronic program guide information per time slot.

According to a further aspect of the device, the processor is further configured to measure the time spent according to frequency of user consultation of the electronic program guide information per time slot of the electronic program guide.

According to a further aspect of the device, the device is a Set Top Box.

According to a further aspect of the device, the device is a gateway.

According to a further aspect of the device, the device is a mobile communication device.

According to a further aspect of the device, the mobile communication device is a smart phone.

### BRIEF DESCRIPTION OF THE DRAWINGS

More advantages of the present disclosure will appear through the description of particular, non-restricting embodiments. To describe the way the advantages of the present disclosure can be obtained, particular descriptions of the present principles are rendered by reference to specific embodiments thereof which are illustrated in the appended drawings. The drawings depict exemplary embodiments of the disclosure and are therefore not to be considered as limiting its scope. The embodiments described can be combined to form particular advantageous embodiments. In the following figures, items with same reference numbers as items already described in a previous figure will not be described again to avoid unnecessary obscuring the disclosure. The embodiments will be described with reference to the following drawings in which:
**Figures 1** **and** **2** are a graphical representation of a prior art program guide for two channels.
**Figure 3** is an embodiment of a two-channel program guide according to the present principles.
**Figure 4** is an embodiment of a device suitable for implementing the method per the principles of the present disclosure.
**Figure 5** is a flow chart of an embodiment of a method per the principles of the present disclosure.

It should be understood that the drawings are for purposes of illustrating the concepts of the disclosure and are not necessarily the only possible configuration for illustrating the disclosure.

### DETAILED DESCRIPTION

The present description illustrates the principles of the present disclosure. It will thus be appreciated that those skilled in the art will be able to devise various arrangements that, although not explicitly described or shown herein, embody the principles of the disclosure and are included within its spirit and scope.

All examples and conditional language recited herein are intended for educational purposes to aid the reader in understanding the principles of the disclosure and the concepts contributed by the inventor to furthering the art, and are to be construed as being without limitation to such specifically recited examples and conditions.

Moreover, all statements herein reciting principles, aspects, and embodiments of the disclosure, as well as specific examples thereof, are intended to encompass both structural and functional equivalents thereof. Additionally, it is intended that such equivalents include both currently known equivalents as well as equivalents developed in the future, i.e., any elements developed that perform the same function, regardless of structure.

As discussed in the background section, the rendering of information in an EPG is subject to contradictory user requirements. On one hand, an effort is made to provide the user with detailed information so as to enable the user to make a factual based judgment of his level of interest for viewing, or for programming a recording of, an ongoing or scheduled television or radio program. On the other hand, providing the user with detailed information of all scheduled programs hinders a user wishing to get a clear overview of scheduled programs, especially of programs which are scheduled during time slots that are relatively far from the user's current navigational position in the program guide. A solution was discussed in the background section wherein the user has access to several presentation modes which can be selected at will by the user. Such solution may not be satisfactory since it requires multiple user interactions, the user being constrained to switch back and forth between the different presentation modes repeatedly. Further, a typical EPG attributes a fixed space (area, surface), in terms of number of pixels or window size, to each time slot, for rendering program guide information related to the time slot. Programs spanning over multiple time slots may thus have a relatively higher number of available pixels or may have a larger available window size than programs spanning over only one time slot or over less than a time slot. In the first case, rendering space may be wasted. In the second case, the available pixel area or window size may be insufficient to render information in a legible manner. The present principles propose solutions to, amongst others, the problems discussed above and in the background section.

According to the present principles, a method is provided for accessing program guide information enabling access to detailed information as well as enabling overview, easy and quick navigation between scheduled programs presented in the program guide, while offering an improved management of available space for rendering information related to the scheduled programs. The present principles thereby enable to considerably improve the user experience.

According to the present principles, the rendering space available for a time slot (or, in other words, for a column in the EPG grid) is no longer fixed, i.e., is no longer proportional to the time slot duration (or grid column width) but rather adjusted (modulated) per time slot. This results in the EPG information being rendered according to a non-linear (distorted) timeline. The adjustment (modulation) of the rendering space per time slot is carried out based on user behavior obtained (learned) from user navigation through the program guide. From the learned user behavior it can be concluded that some time slots (grid columns) are of less interest to the user than other time slots (grid columns). Initially, each time slot has an initial rendering space attributed to it, which however does not need to be the same (see further on). Then, from user behavior obtained from the user's navigation in the program guide, the rendering space attributed to each time slot (to each column of the EPG grid) may be either enlarged (which has the effect of stretching the rendering space for the time slot), reduced (having the effect of shrinking the rendering space for the time slot), or remain unchanged.

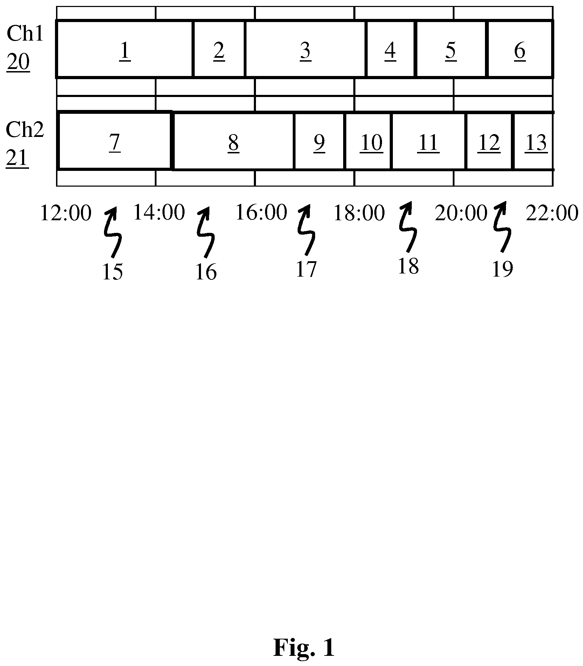

**Figure 1** is a graphical representation of a prior art program guide. For the purpose of clarity, the program guide is displaying program information for only two channels and for only ten hours. In practice, a program guide may display program information for many channels and may span over durations that are shorter or longer than ten hours. In practice, the program guide may employ a scrolling mechanism for vertical and/or horizontal scrolling the program guide information on a display. The program guide includes a grid in which programs for two channels are represented, namely for a first channel 'CH1' **20,** and for a second channel 'CH2' **21.** The program guide is organized in time slots or columns representing a duration of two hours per time slot, a first time slot **15,** a second time slot **16,** a third time slot **17,** a fourth time slot **18** and a fifth time slot **19.** The program guide lists programs **1** to **13.** In this representation the size of each time slot is fixed. It can be observed that during time slot **18** many short programs are scheduled, leaving relatively little space available for rendering information related to these programs, while during time slot **15** only some long programs are scheduled, leaving a relatively large space available for rendering information related to the programs **1** and **7** scheduled during that time slot. A user of the program guide who is principally interested in programs that are scheduled during time slot **18,** may observe that the program information related to each of the programs **4, 5, 10** and **11** is regrettably displayed in condensed or abbreviated form.

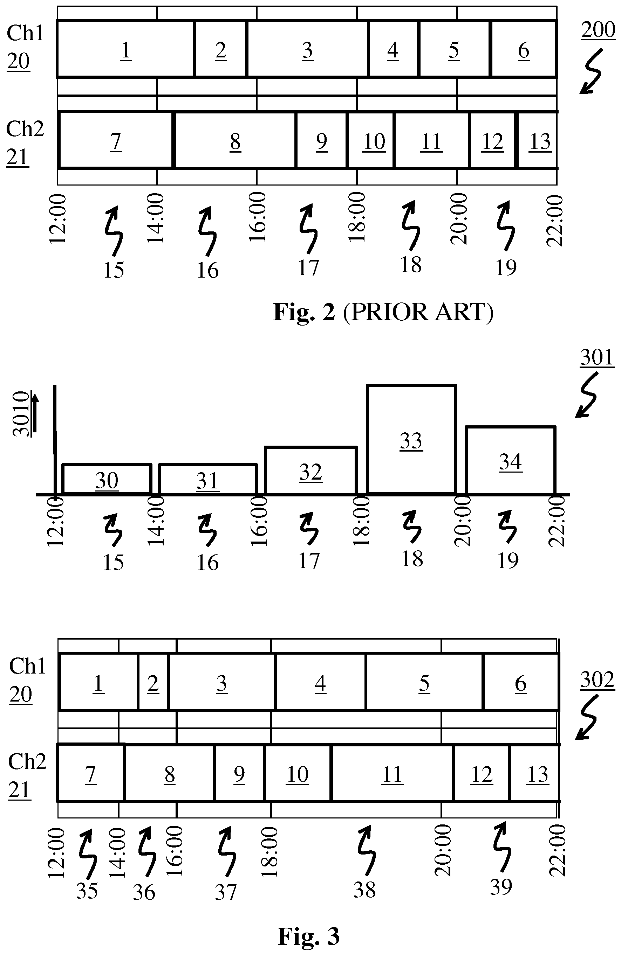

In **Figure 2****,** on drawing sheet 2/4, the prior art electronic program guide presentation of figure 1 is copied, under reference number **200.** In **Figure 3****,** reference **302** represents a program guide according to the present principles. Reference **301** is a histogram (references **30-34**) obtained from measuring one or more user navigation parameter(s) **3010** per time slot **15-19,** and represents the user's interest per time slot of the program guide. The one or more user navigation parameter is for example a frequency of consultation of the program guide information per time slot, or a consultation duration of program information per time slot, or both. Preferably, the one or more parameters are measured over a duration of at least several days or even weeks, so that a representative usage pattern can be established. Alternatively, the one or more parameters are measured over a shorter period, for example over a 24-hour period. For example, the user of the program guide frequently consults the program guide for information about programs in time slot **18,** while the user is less interested in programs scheduled during time slot **19** and even less during time slot **17** and rarely consults programs scheduled during time slots **15** and **16.** In the electronic program guide **302,** it can be observed that the obtained one or more user navigation parameter(s) is (are) used to adjust the time slot size or the available rendering space per time slot, so that, more space is advantageously available for rendering of program guide information for programs that are scheduled during time slots **37-39** which are of particular interest to the user. This is at the cost of reducing the available space for rendering program guide information related to time slots **35** and **36,** which present program information of programs that are scheduled during time slots which are of lesser interest to the user. The time slot size or available rendering space per time slot is thus a function of the interest of the user of the program guide, as obtained (learned) from one or more user navigation parameter(s) of the program guide information per time slot. For example, available rendering space for programs **1, 2, 7** and **8** is reduced while available rendering space for programs **4, 5, 6, 10, 11, 12** and **13** is increased, leaving more room for presenting more detailed program information for programs which are scheduled during time slots in which the user is particularly interested.

According to a particular embodiment, during initialization of the program guide and in absence of any user navigation data history, the time slot size / available rendering space per time slot, for rendering program information is set to a default size; for example, a same size for all time slots, or a different size that is proportional to common values for user navigation parameter(s) obtained from measurement of user navigation parameter(s) for a number of other users, for example from other users having an age profile similar to the registered user of the device presenting the program guide, and/or from general metrics obtained from audience measurements.

According to a particular embodiment the user navigation parameter data is split into two data parts, a first data part (e.g. stored in a first memory zone) computed over preceding use, and a second part (e.g., stored in a second memory zone) computed over present use. The first part is used for computing time slot size or available space per time slot when the EPG is activated, while the second part is created from scratch each time when the EPG is activated and is computed and updated while the EPG is used. The first part is updated (recomputed) with the second part when the EPG is deactivated. This two-step arrangement advantageously avoids that the time slot size/available rendering space per time slot is adjusted while the EPG is used/active, as this can be confusing for the user.

Navigation parameter data can be obtained in different ways. For example, the interest of an EPG user for (a) particular time slot(s) can be obtained from measuring time spent on consulting EPG information per time slot. A time slot or time slots which is/are consulted for a period that is longer than for other time slots is/are of particular interest to the user. The time spent on consulting time slots can be measured from the rendering duration (display time) of per time slot, for example when the user scrolls through a program schedule.

Navigation parameter data and user interest for (a) particular time slot(s) can also be measured from the particular interest that the user showed for obtaining more detailed information on a program scheduled during the time slot. This is for example the case when the EPG has a display mode in which it can display more detailed information on a scheduled program on request of the user. Time slots wherein programs are scheduled for which the user requests more detailed information are of particular interest to the user.

Navigation parameter data and user interest for (a) particular time slot(s) can also be measured from the frequency with which the user consulted the time slot(s). Time slots more frequently consulted than others are of particular interest to the user.

Any of the above methods for obtaining navigation parameter data and user interest for (a) particular time slot(s) can be combined to form a particular advantageous embodiment.

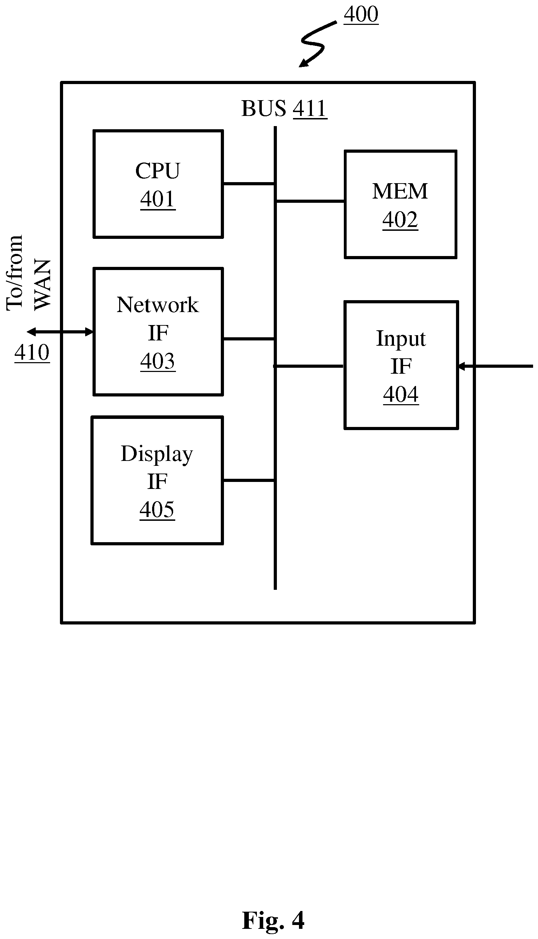

**Figure 4** is an embodiment of a device suitable for implementing the method per the principles of the present disclosure. The device **400** includes a processor or central processing unit **401,** a memory **402,** a network interface **403** for connection to a WAN via a connection **410,** an input interface **404** (e.g. keyboard or tactile display), and a display interface **405.** The elements **401-405** are interconnected via an internal data communication bus **411.** Processor **401** is configured to obtain EPG information via network interface **403,** and to store this information in memory **402.** Memory **402** is configured to store machine readable instructions which are executable for processor **401,** including machine readable instructions resulting in the rendering of an EPG via display interface **405.** Memory **402** is further configured to store user navigation parameters and user navigation data, i.e. first navigation parameters in a first memory zone of memory **402,** and second navigation parameters in a second zone of memory **402,** or device **400** has separate memories **402a** and **402b** (not shown), such as a first memory and a second memory, e.g., the first memory being configured to store user navigation parameters obtained from a preceding use of the electronic program guide and the second memory being configured to store user navigation parameters obtained from a present use of the electronic program guide. Processor **401** is configured to obtain user navigation data/parameters and store these in memory **402,** and to compute (adjust), for the EPG, time slot size (width)/available space per time slot/grid column width/number of pixels available per time slot as a function of the user navigation data/parameters.

According to a particular embodiment and to advantageously avoid that a time slot width continues to increase when a user repeatedly shows a particular interest in the same time slots, an upper limit value is set for the time slot width. At any time, a time slot width will then not exceed the upper limit value by upper limiting the time slot width to the upper limit.

According to a particular embodiment and to advantageously avoid that a time slot width continues to decrease when a user repeatedly does not show any particular interest in the same time slots, a lower limit value is set for the time slot width. At any time, a time slot width will then not exceed the lower limit value by lower limiting the time slot width to the lower limit.

According to a particular embodiment, the upper and lower limiting are advantageously combined.

According to a particular embodiment, the size of time slots having smallest width is temporarily increased for better legibility when the user selects, for example with a cursor, such a time slot. The increase in width is undone when the user does no longer selects/deselects the time slot.

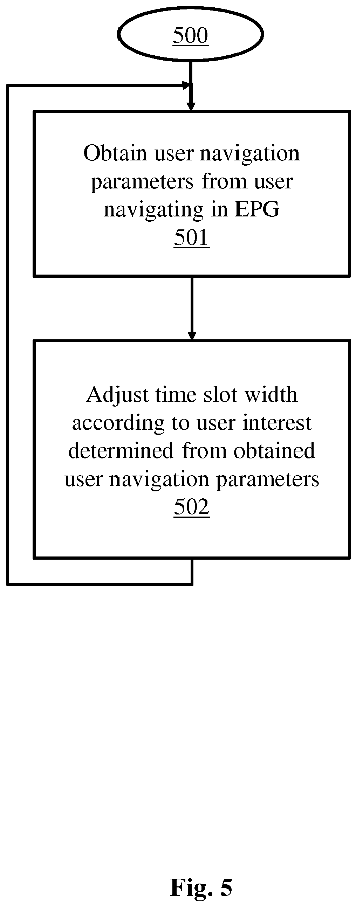

**Figure 5** is a flow chart **500** related to an embodiment of the method for a program guide. The method is for example implemented by device **400.**

In a first step **501,** one or more user navigation parameter(s) is(are) obtained from user navigation in an electronic program guide per time slot of the electronic program guide. In a second step **502,** time slot width for rendering program information per time slot of the electronic program guide is adjusted according to said at least one user navigation parameter by increasing time slot width for more consulted time slots and reducing time slot width for less consulted time slots.

It is to be appreciated that some elements in the drawings may not be used or be necessary in all embodiments. Some operations may be executed in parallel. Embodiments other than those illustrated and/or described are possible. For example, a device implementing the present principles may include a mix of hard- and software.

It is to be appreciated that aspects of the principles of the present disclosure can be embodied as a system, method or computer readable medium. Accordingly, aspects of the principles of the present disclosure can take the form of an entirely hardware embodiment, an entirely software embodiment (including firmware, resident software, micro-code and so forth), or an embodiment combining hardware and software aspects that can all generally be defined to herein as a "circuit", "module" or "system". Furthermore, aspects of the principles of the present disclosure can take the form of a computer readable storage medium. Any combination of one or more computer readable storage medium(s) can be utilized.

Thus, for example, it is to be appreciated that the diagrams presented herein represent conceptual views of illustrative system components and/or circuitry embodying the principles of the present disclosure. Similarly, it is to be appreciated that any flow charts, flow diagrams, state transition diagrams, pseudo code, and the like represent various processes which may be substantially represented in computer readable storage media and so executed by a computer or processor, whether such computer or processor is explicitly shown.

A computer readable storage medium can take the form of a computer readable program product embodied in one or more computer readable medium(s) and having computer readable program code embodied thereon that is executable by a computer. A computer readable storage medium as used herein is considered a non-transitory storage medium given the inherent capability to store the information therein as well as the inherent capability to provide retrieval of the information there from. A computer readable storage medium can be, for example, but is not limited to, an electronic, magnetic, optical, electromagnetic, infrared, or semiconductor system, apparatus, or device, or any suitable combination of the foregoing. Some or all aspects of the storage medium may be remotely located (e.g., in the 'cloud'). It is to be appreciated that the following, while providing more specific examples of computer readable storage mediums to which the present principles can be applied, is merely an illustrative and not exhaustive listing, as is readily appreciated by one of ordinary skill in the art: a hard disk, a read-only memory (ROM), an erasable programmable read-only memory (EPROM or Flash memory), a portable compact disc read-only memory (CD-ROM), an optical storage device, a magnetic storage device, or any suitable combination of the foregoing.

## Claims

1. A method (500) for a program guide, said method comprising:
obtaining (501) at least one user navigation parameter from user navigation in an electronic program guide per time slot of the electronic program guide; and
adjusting (502) time slot width for rendering program information per time slot of the electronic program guide according to said at least one user navigation parameter by increasing time slot width for more consulted time slots and reducing time slot width for less consulted time slots.

2. The method according to claim 1, wherein said method further comprises:
during initialization of the electronic program guide and before obtaining said at least one user navigation parameter, adjusting said time slot width per time slot of the electronic program guide based on user navigation parameters obtained from other users.

3. The method according to claim 1 or 2, wherein said method further comprises:
storing said user navigation parameters in a first memory and in a second memory, the user navigation parameters in the first memory being obtained from a preceding use of the electronic program guide, and the user navigation parameters in the second memory being obtained from a present use of the electronic program guide; and
when said electronic program guide is closed, updating said user navigation parameters in said first memory with said user navigation parameters from said second memory.

4. The method according to any of claims 1 to 3, wherein said user navigation parameters are obtained from measuring time spent by a user on consulting electronic program guide information per time slot.

5. The method according to claim 4, wherein said time spent is measured from rendering duration of electronic program guide information per time slot.

6. The method according to claim 4, wherein said time spent is measured according to frequency of user consultation of the electronic program guide information per time slot of the electronic program guide.

7. The method according to any of claims 1 to 6, wherein the method is implemented by a mobile communication device.

8. The method according to any of claims 1 to 6, wherein the method is implemented by a set top box.

9. A device (400) for rendering a program guide, the device comprising a processor (401) configured to:
obtain at least one user navigation parameter from user navigation in an electronic program guide per time slot of the electronic program guide; and
adjust time slot width for rendering program information per time slot of the electronic program guide according to said at least one user navigation parameter by increasing time slot width for more consulted time slots and reducing time slot width for less consulted time slots.

10. The device according to claim 9, wherein said processor is further configured to, during initialization of the electronic program guide and before obtaining said at least one user navigation parameter, adjust said time slot width per time slot of the electronic program guide based on user navigation parameters obtained from other users.

11. The device according to claim 9 or 10, further comprising a first memory (402a) and a second memory (402b), the first memory being configured to store said user navigation parameters obtained from a preceding use of the electronic program guide and the second memory being configured to store user navigation parameters obtained from a present use of the electronic program guide; and
the processor being further configured to, when said electronic program guide is closed, update said user navigation parameters in said first memory with said user navigation parameters from said second memory.

12. The device according to any of claims 9 to 11, wherein said processor is further configured to obtain said user navigation parameters from measuring time spent by a user on consulting electronic program guide information per time slot.

13. The device according to claim 12, wherein said processor is further configured to measure said time spent from a rendering duration of electronic program guide information per time slot.

14. The device according to claim 12, wherein said processor is further configured to measure said time spent according to frequency of user consultation of the electronic program guide information per time slot of the electronic program guide.

15. The device according to any of claims 9 to 14, wherein said device is a Set Top Box.
